# FASCICULE DE BREVET EUROPEEN

(11) **EP 3 038 396 B1**
(45) Date de publication et mention de la délivrance du brevet: **13.10.2021**
(21) Numéro de dépôt: 15199325.0
(22) Date de dépôt: 10.12.2015
(51) Int. Cl.: H04W 4/80, H04B 5/00, H04W 12/08, H04W 88/06, H04L 29/06

(54) **BALISE A MULTIPLES INTERFACES DE COMMUNICATION A DESACTIVATION/REACTIVATION SECURISEES**
LEITPLANKE MIT MEHREREN KOMMUNIKATIONSSCHNITTSTELLEN MIT GESICHERTER DEAKTIVIERUNG/REAKTIVIERUNG
BEACON WITH MULTIPLE COMMUNICATION INTERFACES WITH SECURE DEACTIVATION/REACTIVATION

(30) Priorité: 23.12.2014 EP 14200123
(43) Date de publication de la demande: 29.06.2016
(73) Titulaire: EM Microelectronic-Marin SA, 2074 Marin (CH)
(72) Inventeur: Blangy, Hugues, 1543 Grandcour (CH)
(74) Mandataire: Collé, Emmanuel

(56) Documents cités:
- WO-A1-2006/095212
- JP-A- 2008 203 790
- US-A1- 2006 270 424
- US-A1- 2010 271 177
- Whitson Gordon: "How to Automate Your Phone for Every Room in the House with NFC Tags", Lifehacker, 16 avril 2013 (2013-04-16), XP055197806, Extrait de l'Internet: URL:http://lifehacker.com/how-to-automate- your-phone-for-every-room-in-the-house-473 409963 [extrait le 2015-06-23]
- None

## Description

La présente invention concerne une balise comprenant une unité de contrôle associée à une unité mémoire pour la sauvegarde de données, à un circuit d'horloge et un circuit de communication. Ce circuit de communication comprend une ou deux antenne(s), une première interface utilisant un premier protocole et une seconde interface utilisant un second protocole.

### ART ANTERIEUR

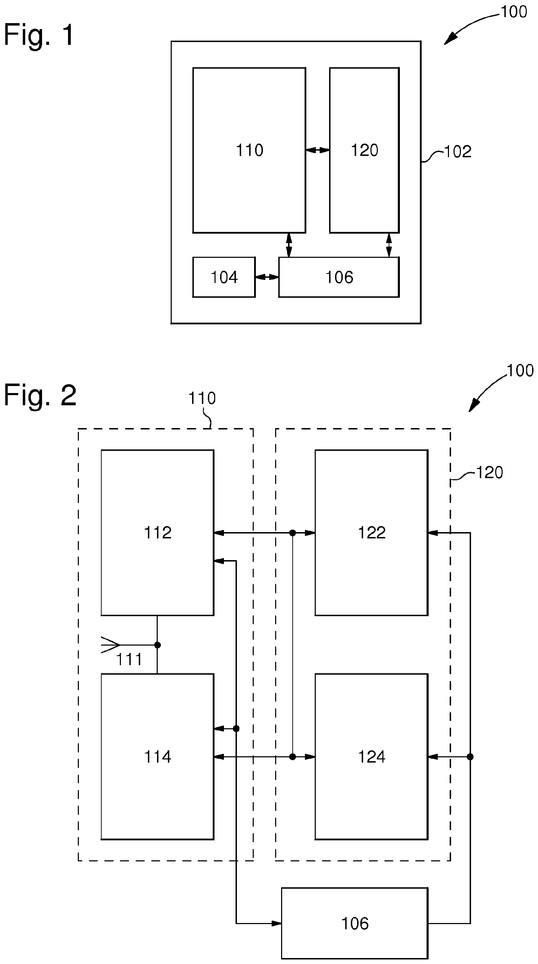

Il est connu des balises c'est-à-dire des dispositifs électroniques autoalimentés par une alimentation comprenant une unité de contrôle associée à une unité mémoire pour la sauvegarde de données, à un circuit d'horloge et un circuit de communication utilisant un protocole de communication comme visible à la figure 1.

Ces balises permettent, via leur circuit de communication, de diffuser des messages à destination de terminaux mobiles tels que des téléphones portables, tablettes ou ordinateurs. Ces terminaux mobiles sont donc compatibles avec le protocole de communication de la balise.

Les messages envoyés peuvent se présenter sous la forme de publicités ou de point d'intérêt. Par exemple, une balise située dans un grand magasin enverra, aux terminaux mobiles possédant une application dédiée audit grand magasin, des messages signalant aux consommateurs les offres de dernières minutes en cours dans le grand magasin. Dans un autre exemple, une balise située dans une zone aéroportuaire pourra fournir aux consommateurs des informations signalant des retards sur des vols spécifiques ou des informations de température et d'humidité aux voyageurs qui arrivent.

Le protocole de communication généralement utilisé est le protocole Bluetooth. Ce protocole Bluetooth définit en effet 3 classes d'émetteurs proposant des portées différentes en fonction de leur puissance d'émission allant de 1mW à 100mW pour une portée D allant respectivement de 10m à 100m.

Toutefois, un inconvénient de ce genre de balise est qu'elles ne sont pas programmables.

En réponse à ce problème, il est prévu d'avoir une balise munie de deux circuits de communications utilisant chacun un protocole différent. Plus précisément on utilisera un protocole longue distance pour la programmation et un protocole courte distance pour l'utilisation standard.

Or, une telle configuration avec deux circuits de communication entraine une augmentation du risque de piratage et donc une baisse de la sécurité d'une telle balise.

De plus, il devient nécessaire de désactiver le circuit de communication utilisant un protocole longue distance pour éviter le piratage.

### RESUME DE L'INVENTION

L'invention a pour but de fournir une balise de communication permettant d'être désactivée et réactivée de façon sûre.

A cet effet, l'invention concerne une balise de communication comprenant une unité de calcul associée à un module mémoire pour la sauvegarde de données et à un circuit de communication, ladite balise étant alimentée par une unité d'alimentation, ledit circuit de communication comprenant une première unité d'interface utilisant un protocole longue distance, une seconde unité d'interface utilisant un protocole courte distance, ledit module mémoire comprenant une première unité mémoire et une seconde unité mémoire, chaque unité mémoire étant électriquement connectée à chaque unité d'interface,
caractérisée en ce que le module mémoire comprend un premier emplacement mémoire et un second emplacement mémoire permettant le stockage, respectivement, d'un premier message reçu par l'intermédiaire de la première unité d'interface en utilisant le protocole longue distance et un second message reçu par l'intermédiaire de la seconde unité d'interface en utilisant le protocole courte distance, ces premiers et seconds messages comprenant une série de bit dont au moins un bit spécifique est utilisé par une porte logique de type ET de l'unité de calcul pour comparer le bit spécifique du premier message avec le bit spécifique du second message pour permettre la désactivation/réactivation de ladite première unité d'interface.

Dans un premier mode de réalisation avantageux, la première unité d'interface accède, en écriture, uniquement au premier emplacement alors que la seconde unité d'interface accède, en écriture, uniquement au second emplacement.

Dans un second mode de réalisation avantageux, les premiers et seconds messages comprennent une série de bit dont au moins un spécifique est utilisé par une porte logique de type ET de l'unité de calcul permettant de comparer le bit spécifique du premier message avec le bit spécifique du second message.

Dans un troisième mode de réalisation avantageux, le premier protocole est un protocole longue distance.

Dans un quatrième mode de réalisation avantageux, le second protocole est un protocole courte distance.

Dans un cinquième mode de réalisation avantageux, le premier message est envoyé via la première unité d'interface et en ce que le second message est envoyé via la seconde unité d'interface.

L'invention concerne également un procédé de gestion d'une balise de communication comprenant une unité de calcul associée à un module mémoire pour la sauvegarde de données et à un circuit de communication, ladite balise étant alimentée par une unité d'alimentation, ledit circuit de communication comprenant une première unité d'interface utilisant un protocole longue distance, une seconde unité d'interface utilisant un protocole courte distance, ledit module mémoire comprenant une première unité mémoire et une seconde unité mémoire, chaque unité mémoire étant électriquement connecté à chaque unité d'interface,
caractérisée en ce que le module mémoire comprend un premier emplacement mémoire et un second emplacement mémoire et en ce que ledit procédé comprenant les étapes suivantes :
1) stocker un premier message dans un premier emplacement du module mémoire et un second message dans un second emplacement du module mémoire :
2) sélectionner un bit spécifique du premier message stocké et un bit spécifique du second message stocké ;
3) comparer le bit spécifique du premier message stocké et le bit spécifique du second message stocké par l'intermédiaire d'une porte logique ET puis passer vers un mode de fonctionnement dans lequel au moins l'une ou l'autre des premières et secondes unités d'interface est désactivée.

Dans un premier mode de réalisation avantageux, la première unité d'interface est désactivée.

Dans un second mode de réalisation avantageux, la seconde unité d'interface est désactivée.

Dans un troisième mode de réalisation avantageux, le procédé comprend en outre une étape préliminaire consistant à recevoir un premier message via la première unité d'interface et un second message via la seconde unité d'interface.

Dans un quatrième mode de réalisation avantageux, le second message est préprogrammé dans le second emplacement mémoire et qu'il comprend en outre une étape préliminaire 0') consistant à recevoir un premier message via la première unité d'interface.

Dans un autre mode de réalisation avantageux, le procédé comprend en outre les étapes :
4) recevoir un message via l'unité d'interface active;
5) stocker le message dans l'emplacement liée à l'unité d'interface active;
6) sélectionner un bit spécifique du message dans l'emplacement liée à l'unité d'interface active et le bit spécifique du message dans l'emplacement liée à l'unité d'interface inactive;
7) comparer le bit spécifique du message dans l'emplacement liée à l'unité d'interface active et le bit spécifique du message dans l'emplacement liée à l'unité d'interface inactive par l'intermédiaire d'une porte logique ET puis passer vers un mode de fonctionnement dans lequel l'unité d'interface désactivée est réactivée.

Dans un autre mode de réalisation avantageux, le procédé comprend en outre une étape 8) consistant à faire une remise à zéro de l'emplacement liée à l'unité d'interface auparavant inactive.

Dans un autre mode de réalisation avantageux, le procédé comprend en outre une étape 9) consistant à réécrire le second message préprogrammé dans le second emplacement mémoire.

Dans un autre mode de réalisation avantageux, la balise est apte à permettre la lecture du bit spécifique des premiers et seconds messages et de la sortie de la porte logique ET.

Dans un autre mode de réalisation avantageux, le procédé comprend en outre une étape initiale à toute autre étape consistant à authentifier l'appareil envoyant le premier message et le second message.

### BREVE DESCRIPTION DES FIGURES

### BREVE DESCRIPTION DES FIGURES

Les buts, avantages et caractéristiques de la présente invention apparaîtront plus clairement dans la description détaillée suivante d'au moins une forme de réalisation de l'invention donnée uniquement à titre d'exemple non limitatif et illustrée par les dessins annexés sur lesquels :
- les figures 1 à 3 représentent de manière schématique une balise selon l'invention.

### DESCRIPTION DETAILLEE

Sur la figure 1 est représentée une balise 100 selon la présente invention. Cette balise 100 se présente sous la forme d'un boitier 102 dans lequel un dispositif électronique est placé. Ce dispositif électronique est alimenté par une unité d'alimentation 104. Cette unité d'alimentation 104 peut être une pile ou un accumulateur ou une unité autonome telle un convertisseur AC-DC ou une cellule solaire. L'avantage d'une telle unité autonome est d'être indépendante au niveau énergétique.

Le dispositif électronique 100, visible à la figure 1, comporte une unité de calcul ou microcontrôleur 106. Cette unité de calcul est reliée à un module mémoire 120. Cette unité de calcul est également connectée à une unité de communication 110, cette unité de communication coopérant également avec le module mémoire.

L'unité de communication 110, visible à la figure 2, comprend une première unité d'interface 112 et une seconde unité d'interface 114. Cette première unité d'interface 112 et la seconde unité d'interface 114 communique vers l'extérieure via au moins une antenne 111. La première unité d'interface 112 est une unité d'interface utilisant un premier protocole P1 de communication alors que la seconde unité d'interface 114 utilise un second protocole P2 de communication. Plus préférentiellement, la première unité d'interface 112 utilisant un premier protocole de communication dit longue distance alors que la seconde unité d'interface 114 utilise un second protocole de communication dit courte distance. Un protocole de communication longue distance peut être du type Bluetooth ou EPC (avec une bande de fréquence de 860MHz à 960MHz) et un second protocole de communication courte distance peut être du type NFC.

Par ailleurs, le module mémoire 120 comprend en outre une première unité mémoire 122 liée à la première unité d'interface 112 et une seconde unité mémoire 124 liée à la seconde unité d'interface 114. Le fait d'avoir deux unités mémoires distinctes chacune liée à une unité d'interface permet une plus grande efficacité de traitement de l'information.

En effet, le fait d'avoir une seule mémoire oblige à balayer toute la mémoire pour trouver une information parmi toutes les informations constituées des informations sur le premier protocole et sur le second protocole. Alors qu'avec deux unités mémoires distinctes, la zone à balayer est plus faible donc l'efficacité augmente.

Avantageusement selon l'invention, la balise 100 est configurée de sorte à avoir une désactivation ou une réactivation de la première unité d'interface utilisant un premier protocole de communication dit longue distance qui soit plus sure.

Pour cela, la première interface 112 est également connectée à la seconde unité mémoire 124 et la seconde interface 114 est également connectée à la première unité mémoire 124. De ce fait, chaque interface est connectée aux deux unités mémoires.

Pour désactiver la première interface, il est prévu une procédure qui prévoit l'envoi d'un premier message M1 de désactivation. Un tel premier message M1 consiste en une série de bit envoyée dans un emplacement spécifique d'une mémoire. Dans le cas de la désactivation de la première interface 112 utilisant un protocole longue distance P1, le premier message M1 est envoyé dans un premier emplacement de la première unité mémoire 122 associé avec ladite première interface 112. Le premier message M1 est alors envoyé via le protocole longue distance P1 et reçu par la première interface 112.

Avantageusement selon l'invention, il est prévu d'augmenter la sécurité de la désactivation de la première interface 112 de l'unité de communication 110 en prévoyant l'envoi d'un second message M2. Ce second message M2 est transmis à la balise 100 selon l'invention en utilisant la seconde interface 114 c'est-à-dire ici l'interface utilisant le protocole courte distance P2. Le second message M2, transmis par ce protocole courte distance P2 et reçu par la seconde interface 114, est mis en mémoire dans un second emplacement mémoire 124 spécifique.

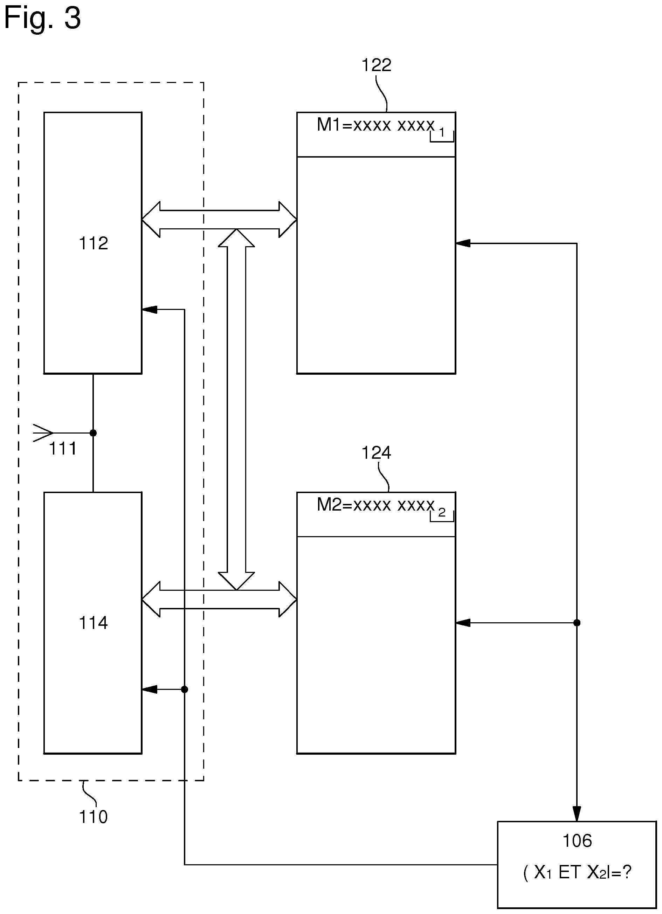

Cette caractéristique permet d'avoir deux messages qui sont comparés de sorte que l'unité de calcul soit sûre de l'instruction reçue. En effet, chacun de ses messages comprend une série de bit X et un bit de désactivation Xi, bit de désactivation X₁ pour le premier message M1 et bit de désactivation X₂ pour le second message M2 de sorte que l'unité de calcul 106 prennent ces bits de désactivation pour opérer une étape de comparaison comme visible à la figure 3.

Cette étape de comparaison consiste à faire passer les deux bits de désactivation X₁, X₂ dans une porte logique, ici une porte logique ET, et de voir la sortie obtenue. Si les deux bits de désactivation X₁, X₂ sont à un niveau logique « 1 », la sortie sera à un niveau logique « 1 » signifiant que la première interface 112 doit être désactivée. Si la sortie de la porte logique est à un niveau logique « 0 », cela signifie qu'au moins l'un des deux bits de désactivation X₁, X₂ est à un niveau logique « 0 ». Si au moins l'un des deux bits de désactivation X₁, X₂ est à un niveau logique « 0 », cela signifie que l'un des deux messages M1, M2 est corrompu ou qu'il y a une tentative d'intrusion dans la balise.

On comprend donc que le fait d'avoir deux messages distincts pour la désactivation de l'une des unités d'interface permet une sécurité optimisée.

Astucieusement selon l'invention, pour optimiser encore plus la sécurité, un cloisonnement des accès mémoires est opéré. Plus particulièrement, il est prévu que l'unité de calcul 106 configure la première unité d'interface 112 afin que celle-ci ne puisse avoir accès en écriture, lors de l'envoi du premier message M1, qu'à l'emplacement destiné à stocker ledit premier message. L'unité de calcul 106 configure la seconde unité d'interface 114 afin que celle-ci ne puisse avoir accès en écriture, lors de l'envoi du second message M2, qu'à l'emplacement destiné à stocker ledit second message. Cet emplacement destiné à stocker ledit second message peut se trouver dans la première unité mémoire 122 ou dans la seconde unité mémoire 124.

Pour réactiver la première unité d'interface, la balise selon l'invention prévoit l'envoi d'au moins un message de réactivation. Ce message est envoyé via l'unité d'interface toujours active c'est-à-dire la seconde unité d'interface 114 utilisant le second protocole P2 dit à courte distance. Cette seconde unité d'interface 114 utilisant le second protocole P2 dit à courte distance permet ainsi une certaine sécurité étant donné que cela nécessite une proximité entre l'appareil envoyant le message de réactivation et la balise 100.

Ce message de réactivation est similaire au message de désactivation. Ce message de réactivation est stocké, par ladite balise, dans l'emplacement mémoire spécifique destiné à stocker ledit second message, cet emplacement spécifique se trouvant dans la première unité mémoire 122 ou dans la seconde unité mémoire 124. Ce message de réactivation comprend un bit de réactivation, similaire au bit de désactivation des premiers et seconds messages de désactivations, de sorte que l'unité de calcul 106 prend ce bit de réactivation et le bit de désactivation du premier message pour opérer une étape de comparaison.

Cette étape de comparaison consiste à faire passer les deux bits dans une porte logique, ici une porte logique ET, et de voir la sortie obtenue. En théorie, le bit spécifique du message de réactivation est à un niveau logique « 0 » alors que le bit spécifique X₁ du premier message envoyé lors de la désactivation est à un niveau logique « 1 ». La sortie sera donc à un niveau logique « 0 » signifiant que la première interface 112 doit être réactivée.

Une fois la première unité d'interface 112 réactivée, une étape réalisée immédiatement après la réactivation de la première unité d'interface 112 consiste à faire une opération de remise à zéro de sorte que le premier emplacement spécifique soit à zéro.

La première interface pourra être de nouveau désactivée par l'envoi de deux messages permettant d'avoir, en sortie de la porte logique ET, un niveau logique « 1 ».

Dans une première variante, il pourra être prévu que la balise soit préprogrammée de sorte qu'un des deux emplacements spécifiques pour le stockage des messages de désactivation soit initialisé à « 1 ». Préférentiellement, l'emplacement préprogrammé sera l'emplacement dédié au second message M2 envoyé via la seconde unité d'interface 114 utilisant le second protocole P2. Cet emplacement sera programmé avec une série de bits de sorte que le bit spécifique utilisé pour être comparé dans la porte logique ET sera un à niveau logique « 1 ».

Dans une seconde variante, il est envisageable de lire les données stockées. Pour cela, il est possible d'utiliser la seconde unité d'interface 114 utilisant le protocole courte distance P2 pour lire les emplacements mémoires. En effet, si les accès mémoire sont cloisonnés en écriture, ils ne le sont pas en lecture si bien que la seconde unité d'interface 114 ne peut écrire que dans le second emplacement mémoire mais elle peut lire le premier emplacement mémoire et le second emplacement mémoire. Cela permet ainsi de connaitre le statut de la première interface 112 et être sûr de sa désactivation. Ainsi, il est possible de lire, via un appareil tel un téléphone mobile ou une tablette, les bits spécifiques des deux emplacements mémoires et de faire un ET logique pour en déduire le statut de la première unité d'interface 112. Alternativement, le résultat du ET logique peut être directement lu par l'appareil. De cette manière, l'utilisateur peut être rassuré que le protocole de communication longue distance est désactivé, et donc que personne ne peut accéder aux données contenues dans l'unité de mémoire à son insu.

Néanmoins, il est possible, dans le cas où un emplacement mémoire est déjà programmé, de simplement lire l'emplacement mémoire non programmé. Ainsi, dans le cas de la première variante dans laquelle le second message stocké dans le second emplacement mémoire est préprogrammé, il suffit de lire le premier message M1 stocké dans le premier emplacement mémoire pour voir le statut de la balise.

La sécurité du système peut être augmentée en ajouter une étape initiale lors de laquelle la balise authentifie le lecteur. Effectivement, il peut être utile d'avoir cette étape préalable d'identification lors de laquelle un code d'identification est transmis et analysé de sorte à déterminer si l'appareil tentant de communiquer avec la balise est autorisé à le faire.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

Bien entendu, il est envisageable que les premiers et secondes messages M1, M2 envoyés permettent la désactivation de la première unité d'interface et de la seconde unité d'interface.

De même, on comprendra que les protocoles P1 et P2 peuvent être ne sont pas limités aux protocoles mentionnés.

## Revendications

1. Balise de communication (100) comprenant une unité de calcul (106) associée à un module mémoire (120) pour la sauvegarde de données et à un circuit de communication (110), ladite balise étant alimentée par une unité d'alimentation (104), ledit circuit de communication comprenant une première unité d'interface (112) utilisant un protocole longue distance (P1), une seconde unité d'interface (114) utilisant un protocole courte distance (P2), ledit module mémoire comprenant une première unité mémoire (122) et une seconde unité mémoire (124), chaque unité mémoire étant électriquement connectée à chaque unité d'interface,
**caractérisée en ce que** le module mémoire comprend un premier emplacement mémoire et un second emplacement mémoire permettant le stockage, respectivement, d'un premier message (M1) reçu par l'intermédiaire de la première unité d'interface (112) en utilisant le protocole longue distance (P1) et un second message (M2) reçu par l'intermédiaire de la seconde unité d'interface (114) en utilisant le protocole courte distance (P2), ces premier et second messages (M1, M2) comprenant une série de bits dont au moins un bit spécifique (X₁, X₂) est utilisé par une porte logique de type ET de l'unité de calcul pour comparer le bit spécifique du premier message avec le bit spécifique du second message pour permettre la désactivation/réactivation de ladite première unité d'interface (112).

2. Balise de communication (100) selon la revendication 1, **caractérisée en ce que** la première unité d'interface accède, en écriture, uniquement au premier emplacement alors que la seconde unité d'interface accède, en écriture, uniquement au second emplacement.

3. Procédé de gestion d'une balise de communication (100) comprenant une unité de calcul associée à un module mémoire pour la sauvegarde de données et à un circuit de communication, ladite balise étant alimentée par une unité d'alimentation, ledit circuit de communication comprenant une première unité d'interface utilisant un protocole longue distance (P1), une seconde unité d'interface (114) utilisant un protocole courte distance (P2), ledit module mémoire comprenant une première unité mémoire et une seconde unité mémoire, chaque unité mémoire étant électriquement connectée à chaque unité d'interface,
**caractérisée en ce que** le module mémoire comprend un premier emplacement mémoire et un second emplacement mémoire et **en ce que** ledit procédé comprenant les étapes suivantes :
1) stocker un premier message reçu par l'intermédiaire de la première unité d'interface (112) en utilisant le protocole longue distance (P1) dans un premier emplacement du module mémoire et un second message reçu par l'intermédiaire de la seconde unité d'interface (114) en utilisant le protocole courte distance (P2) dans un second emplacement du module mémoire ;
2) sélectionner un bit spécifique parmi une série de bits du premier message stocké et un bit spécifique parmi une série de bits du second message stocké ;
3) comparer le bit spécifique du premier message stocké et le bit spécifique du second message stocké par l'intermédiaire d'une porte logique ET, pour permettre la désactivation/réactivation de ladite première unité d'interface (112).

4. Procédé de gestion d'une balise de communication (100) selon la revendication 3, **caractérisé en ce que** la première unité d'interface (112) est désactivée.

5. Procédé de gestion d'une balise de communication (100) selon la revendication 3, **caractérisé en ce que** la seconde unité d'interface (114) est désactivée.

6. Procédé de gestion d'une balise de communication (100) selon l'une des revendications 4 ou 5, **caractérisé en ce qu'**il comprend en outre une étape préliminaire 0) consistant à recevoir un premier message via la première unité d'interface et un second message via la second unité d'interface.

7. Procédé de gestion d'une balise de communication (100) selon l'une des revendications 4 ou 5, **caractérisé en ce que** le second message est préprogrammé dans le second emplacement mémoire et qu'il comprend en outre une étape préliminaire 0') consistant à recevoir un premier message via la première unité d'interface.

8. Procédé de gestion d'une balise de communication (100) selon les revendications 6 ou 7, **caractérisé en ce qu'**il comprend en outre les étapes :
4) recevoir un message via l'unité d'interface active;
5) stocker le message dans l'emplacement liée à l'unité d'interface active;
6) sélectionner un bit spécifique du message dans l'emplacement liée à l'unité d'interface active et le bit spécifique du message dans l'emplacement liée à l'unité d'interface inactive;
7) comparer le bit spécifique du message dans l'emplacement liée à l'unité d'interface active et le bit spécifique du message dans l'emplacement liée à l'unité d'interface inactive par l'intermédiaire d'une porte logique ET puis passer vers un mode de fonctionnement dans lequel l'unité d'interface désactivée est réactivée.

9. Procédé de gestion d'une balise de communication (100) selon la revendication 8, **caractérisé en ce qu'**il comprend en outre une étape 8) consistant à faire une remise à zéro de l'emplacement liée à l'unité d'interface auparavant inactive.

10. Procédé de gestion d'une balise de communication (100) selon la revendication 9 dépendante de la revendication 7, **caractérisé en ce qu'**il comprend en outre une étape 9) consistant à réécrire le second message préprogrammé dans le second emplacement mémoire.

11. Procédé de gestion d'une balise de communication (100) selon l'une des revendications 3 à 10, **caractérisé en ce que** la balise est apte à permettre la lecture du bit spécifique des premiers et seconds messages (M1, M2) et de la sortie de la porte logique ET.

12. Procédé de gestion d'une balise de communication (100) selon les revendications 6 ou 7, **caractérisé en ce qu'**il comprend en outre une étape initiale à toute autre étape consistant à authentifier l'appareil envoyant le premier message et le second message.

## Patentansprüche

1. Kommunikationsleitplanke (100) mit einer Recheneinheit (106), die einem Speichermodul (120) zum Speichern von Daten und einer Kommunikationsschaltung (110) zugeordnet ist, wobei die Leitplanke von einer Stromversorgungseinheit (104) gespeist wird; die Kommunikationsschaltung umfasst eine erste Schnittstelleneinheit (112), die ein Long-Range-Protokoll (P1) verwendet und eine zweite Schnittstelleneinheit (114), die ein Short-Range-Protokoll (P2) verwendet, wobei das Speichermodul eine erste Speichereinheit (122) und eine zweite Speichereinheit (124) umfasst, wobei jede Speichereinheit mit jeder Schnittstelleneinheit elektrisch verbunden ist,
**dadurch gekennzeichnet, dass** das Speichermodul einen ersten Speicherort und einen zweiten Speicherort umfasst, die die Speicherung einer ersten Nachricht (M1) ermöglichen, die über die erste Schnittstelleneinheit (112) unter Verwendung des Long-Range-Protokolls (P1) empfangen wird und einer zweiten Nachricht (M2), die über die zweite Schnittstelleneinheit (114) unter Verwendung des Short-Range-Protokolls (P2) empfangen wird, wobei diese ersten und zweiten Nachrichten (M1, M2) eine Reihe von Bits umfassen, von denen mindestens ein spezifisches Bit (X₁, X₂) durch ein Logikgatter vom UND-Typ der Berechnungseinheit verwendet wird, um das spezifische Bit der ersten Nachricht mit dem spezifischen Bit der zweiten Nachricht zu vergleichen, um die Deaktivierung/Reaktivierung der ersten Schnittstelleneinheit (112) zu ermöglichen.

2. Kommunikationsleitplanke (100) nach Anspruch 1, **dadurch gekennzeichnet, dass** die erste Schnittstelleneinheit nur auf den ersten Standort im Schreibmodus zugreift, während die zweite Schnittstelleneinheit nur auf den zweiten Standort im Schreibmodus zugreift.

3. Verfahren zum Verwalten einer Kommunikationsleitplanke (100), das eine Berechnungseinheit umfasst, die einem Speichermodul zum Speichern von Daten und einer Kommunikationsschaltung zugeordnet ist, wobei die Leitplanke von einer Stromversorgungseinheit gespeist wird, wobei die Kommunikationsschaltung eine erste Schnittstelleneinheit umfasst, die ein Long-Range-Protokoll (P1) verwendet und eine zweite Schnittstelleneinheit (114), die ein Short-Range-Protokoll (P2) verwendet, wobei das Speichermodul eine erste Speichereinheit und eine zweite Speichereinheit umfasst, wobei jede Speichereinheit mit jeder Schnittstelleneinheit elektrisch verbunden ist,
**dadurch gekennzeichnet, dass** das Speichermodul einen ersten Speicherort und einen zweiten Speicherort umfasst und dass das Verfahren die folgenden Schritte umfasst:
1) Speichern einer ersten Nachricht, die über die erste Schnittstelleneinheit (112) unter Verwendung des Long-Range-Protokolls (P1) empfangen wurde, an einem ersten Ort des Speichermoduls, und einer zweiten Nachricht, die über die zweite Schnittstelleneinheit (114) unter Verwendung des Short-Range-Protokolls (P2) empfangen wurde, an einem zweiten Ort des Speichermoduls;
2) Auswählen eines bestimmten Bits aus einer Reihe von Bits der ersten gespeicherten Nachricht und eines bestimmten Bits aus einer Reihe von Bits der zweiten gespeicherten Nachricht;
3) Vergleichen des spezifischen Bits der ersten gespeicherten Nachricht und des spezifischen Bits der zweiten gespeicherten Nachricht über ein UND-Logikgatter, um die Deaktivierung/Reaktivierung der ersten Schnittstelleneinheit (112) zu ermöglichen.

4. Verfahren zum Verwalten einer Kommunikationsleitplanke (100) nach Anspruch 3, **dadurch gekennzeichnet, dass** die erste Schnittstelleneinheit (112) deaktiviert ist.

5. Verfahren zum Verwalten einer Kommunikationsleitplanke (100) nach Anspruch 3, **dadurch gekennzeichnet, dass** die zweite Schnittstelleneinheit (114) deaktiviert ist.

6. Verfahren zum Verwalten einer Kommunikationsleitplanke (100) nach einem der Ansprüche 4 oder 5, **dadurch gekennzeichnet, dass** es ferner eine Vorstufe 0) umfasst, die darin besteht, eine erste Nachricht über die erste Schnittstelleneinheit und eine zweite Nachricht über die zweite Schnittstelleneinheit zu empfangen.

7. Verfahren zum Verwalten einer Kommunikationsleitplanke (100) nach einem der Ansprüche 4 oder 5, **dadurch gekennzeichnet, dass** die zweite Nachricht am zweiten Speicherort vorprogrammiert ist und dass es ferner eine Vorstufe 0') umfasst, die darin besteht, eine erste Nachricht über die erste Schnittstelleneinheit zu empfangen.

8. Verfahren zum Verwalten einer Kommunikationsleitplanke (100) nach Ansprüche 6 oder 7, **dadurch gekennzeichnet, dass** es ferner die Schritte umfasst:
4) Empfangen einer Nachricht über die aktive Schnittstelleneinheit;
5) Speichern der Nachricht an dem Ort, der mit der aktiven Schnittstelleneinheit verknüpft ist;
6) Auswählen eines spezifischen Bits der Nachricht an dem Ort, der mit der aktiven Schnittstelleneinheit verknüpft ist, und des spezifischen Bits der Nachricht an dem Ort, der mit der inaktiven Schnittstelleneinheit verknüpft ist;
7) Vergleichen des spezifischen Bits der Nachricht an dem Ort, der mit der aktiven Schnittstelleneinheit verknüpft ist, mit dem spezifischen Bit der Nachricht an dem Ort, der mit der inaktiven Schnittstelleneinheit verknüpft ist über ein UND-Logikgatter und das anschließende Umschalten in einen Betriebsmodus, in dem die deaktivierte Schnittstelleneinheit wieder aktiviert wird.

9. Verfahren zum Verwalten einer Kommunikationsleitplanke (100) nach Anspruch 8, **dadurch gekennzeichnet, dass** es ferner eine Stufe 8) umfasst, die darin besteht, den Ort zurückzusetzen, der mit der zuvor inaktiven Schnittstelleneinheit verknüpft ist.

10. Verfahren zum Verwalten einer Kommunikationsleitplanke (100) nach Anspruch 9, abhängig von Anspruch 7, **dadurch gekennzeichnet, dass** es ferner eine Stufe 9) umfasst, die darin besteht, die zweite vorprogrammierte Nachricht neu in den zweiten Speicherort zu schreiben.

11. Verfahren zum Verwalten einer Kommunikationsleitplanke (100) nach einem der Ansprüche 3 bis 10, **dadurch gekennzeichnet, dass** die Leitplanke in der Lage ist, das Lesen des spezifischen Bits der ersten und zweiten Nachrichten (M1, M2) und die Ausgabe des UND-Logikgatters zu ermöglichen.

12. Verfahren zum Verwalten einer Kommunikationsleitplanke (100) nach Anspruch 6 oder 7, **dadurch gekennzeichnet, dass** es ferner eine Anfangsstufe vor jedem anderen Schritt umfasst, die darin besteht, das Gerät zu authentifizieren, das die erste Nachricht und die zweite Nachricht sendet.

## Claims

1. Communication beacon (100) comprising a calculation unit (106) associated with a memory module (120) for data storage and with a communication circuit (110), said beacon being powered by a power unit (104), said communication circuit comprising a first interface unit (112) using a long distance protocol (P1), a second interface unit (114) using a short distance protocol (P2), said memory module comprising a first memory unit (122) and a second memory unit (124) each memory unit being electrically connected to each interface unit,
**characterised in that** the memory module includes a first memory location and a second memory location for the storage, respectively, of a first message (M1) received via the first interface unit (112) using the long distance protocol (P1) and a second message (M2) received via the second interface unit (114) using the short distance protocol (P2), these first and second messages (M1, M2) comprising a series of bits including at least one specific bit (X₁, X₂) used by an AND logic gate of the calculation unit to compare the specific bit of the first message to the specific bit of the second message to allow the deactivation/reactivation of said first interface unit (112).

2. Communication beacon (100) according to claim 1, **characterised in that** the first interface unit has only write access to the first location whereas the second interface unit has only write access to the second location.

3. Method for controlling a communication beacon (100) comprising a calculation unit associated with a memory module for data storage and with a communication circuit, said beacon being powered by a power unit, said communication circuit comprising a first interface unit using a long distance protocol (P1), a second interface unit (114) using a short distance protocol (P2), said memory module comprising a first memory unit and a second memory unit each memory unit being electrically connected to each interface unit,
**characterised in that** the memory module comprises a first memory location and a second memory location and **in that** said method including the following steps:
1) storing a first message received via the first interface unit (112) using the long distance protocol (P1) in a first location of the memory module and a second message received via the second interface unit (114) using the short distance protocol (P2) in a second location of the memory module;
2) selecting a specific bit from a series of bits of the first stored message and a specific bit from a series of bits of the second stored message;
3) comparing the specific bit of the first stored message to the specific bit of the second stored message via an AND logic gate, to allow the deactivation/reactivation of said first interface unit (112).

4. Control method for a communication beacon (100) according to claim 3, **characterised in that** the first interface unit (112) is deactivated.

5. Control method for a communication beacon (100) according to claim 3, **characterised in that** the second interface unit (114) is deactivated.

6. Control method for a communication beacon (100) according to any of claims 4 or 5, **characterised in that** it further includes a preliminary step 0) consisting of receiving a first message via the first interface unit and a second message via the second interface unit.

7. Control method for a communication beacon (100) according to any of claims 4 or 5, **characterised in that** the second message is pre-programmed in the second memory location and further includes a preliminary step 0') consisting of receiving a first message via the first interface unit.

8. Control method for a communication beacon (100) according to claims 6 or 7, **characterised in that** it further includes the steps of:
4) receiving a message via the active interface unit;
5) storing the message in the location related to the active interface unit;
6) selecting a specific bit of the message in the location related to the active interface unit and the specific bit of the message in the location related to the active interface unit;
7) comparing the specific bit of the message in the location related to the active interface unit and the specific bit of the message in the location related to the inactive interface unit via an AND logic gate and then switching to an operation mode wherein the deactivated interface unit is reactivated.

9. Control method for a communication beacon (100) according to claim 8, **characterised in that** the method further includes a step 8) consisting of resetting the location related to the previously inactive interface unit.

10. Control method for a communication beacon (100) according to claim 9 dependent on claim 7, **characterised in that** it further includes a step 9) consisting in rewriting the second pre-programmed message in the second memory location.

11. Control method for a communication beacon (100) according to any of claims 3 to 10, **characterised in that** the beacon is adapted to allow the specific bit of the first and second messages (M1, M2) and the output of the AND logic gate to be read.

12. Control method for a communication beacon (100) according to claims 6 or 7, **characterised in that** the method further includes an initial step preceding all other steps consisting of authenticating the device sending the first message and the second message.
